(19) Europäisches Patentamt
European Patent Office
Office européen des brevets

(11) Veröffentlichungsnummer: **0 188 766**
**A1**

(12) # EUROPÄISCHE PATENTANMELDUNG

(21) Anmeldenummer: **85116198.4**

(22) Anmeldetag: **18.12.85**

(51) Int. Cl.⁴: **C 08 G 18/08**, C 08 L 75/08, C 08 J 9/00, C 08 G 18/14

(30) Priorität: **08.01.85 DE 3500337**

(43) Veröffentlichungstag der Anmeldung: **30.07.86 Patentblatt 86/31**

(84) Benannte Vertragsstaaten: **AT BE CH DE FR GB IT LI NL SE**

(71) Anmelder: **BAYER AG, Konzernverwaltung RP Patentabteilung, D-5090 Leverkusen 1 Bayerwerk (DE)**

(72) Erfinder: **Dietrich, Manfred, Dr., Dresdener Strasse 16, D-5090 Leverkusen 1 (DE)**
Erfinder: **König, Klaus, Dr., Heymannstrasse 50, D-5090 Leverkusen 1 (DE)**

(54) **Stabile Dispersionen von Polyharnstoffen und/oder Polyhydrazodicarbonamiden in höhermolekularen, mindestens eine Hydroxylgruppe aufweisenden Hydroxylverbindungen, ein Verfahren zu ihrer Herstellung und ihre Verwendung zur Herstellung von Polyurethankunststoffen.**

(57) Stabile Dispersionen von Polyharnstoffen und/oder Polyhydrazodicarbonamiden mit einem Feststoffgehalt von 5 bis 40 Gew.-% in mindestens eine Hydroxylgruppe aufweisenden höhermolekularen Polyethern sind erhältlich durch kontinuierliche Umsetzung von

a) organischen Polyisocyanaten mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Polyethern

bei einem Äquivalentverhältnis der Komponenten a) zu b) zwischen 1,051 und 1,50 in einem Durchflußmischer in einer solchen Menge, daß die mittlere Verweilzeit der Reaktionskomponenten im Mischer weniger als 10 Minuten beträgt, wobei anschließend das aus dem Durchflußmischer austretende Reaktionsprodukt in einer Vorlage, gegebenenfalls unter Erhitzen auf 50–150 °C und gegebenenfalls unter Nachrühren, gesammelt wird, und werden zur Herstellung von Polyurethankunststoffen verwendet.

EP 0 188 766 A1

BAYER AKTIENGESELLSCHAFT 5090 Leverkusen, Bayerwerk
Konzernverwaltung RP
Patentabteilung GM/bo/c

# Stabile Dispersionen von Polyharnstoffen und/oder Polyhydrazodicarbonamiden in höhermolekularen, mindestens eine Hydroxylgruppe aufweisenden Hydroxylverbindungen, ein Verfahren zu ihrer Herstellung und ihre Verwendung zur Herstellung von Polyurethankunststoffen

Bei der Herstellung von Polyurethan-Kunststoffen, insbesondere von -Weichschaumstoffen haben stabile Dispersionen von Polyharnstoffen und/oder Polyhydrazodicarbonamiden in Polyethern (sog. "PHD-Polyole") als Ausgangsprodukte weltweit Bedeutung erlangt. Insbesondere in den USA werden in der Automobil- und Automobilzulieferer-Industrie Vollschaumsitze aus PHD-Polyolen hergestellt. Dabei werden durch die Verwendung von PHD-Polyolen eine erhöhte Verschäumungssicherheit und eine günstigere Härte/Rohdichte-Relation der Kaltformschaumstoffqualitäten erreicht. Gemäß DE-PS 2 513 815 werden solche Dispersionen kontinuierlich so hergestellt, daß die Umsetzung organischer Polyisocyanate mit primären und/oder sekundären Aminogruppen aufweisenden Polyaminen und/oder Hydrazinen und/oder Hydraziden in höhermolekularen Polyolen in einem Durchflußmischer erfolgt, wobei zur Erzielung möglichst niedriger Viskositäten ein Äquivalentverhältnis (NCO/NH-Verhältnis) von 0,8 bis 1,05 eingehalten wird.

In weiterer Entwicklung des Verfahrens wurde nun überraschenderweise gefunden, daß Dispersionen, die unter Anwendung eines höheren Äquivalentverhältnisses als 1,05 hergestellt werden, Vorteile ergeben, die den Nachteil der erhöhten Viskosität (bei gleichem Feststoffgehalt) mehr als aufwiegen. So läßt sich durch ein erhöhtes Äquivalentverhältnis die Teilchengrößenverteilung der dispergierten Partikel positiv beeinflussen. Überraschenderweise führt eine höhere Kennzahl zu einer erhöhten Feinteiligkeit der Dispersion. Dies bringt insbesondere beim Einsatz von Polyethern mit überwiegend sekundären Hydroxylgruppen eine verbesserte Sedimentationsstabilität. Zum anderen kann, bedingt durch die erhöhte Feinteiligkeit, mit niedrigeren Füllstoffgehalten der Polyether gleiches Eigenschaftsniveau der resultierenden Schaumstoffe erreicht werden, so daß die Verarbeitungsviskositäten der zur Anwendung kommenden "gefüllten" Polyether wieder vergleichbar sind. Dabei können die Dispersionen direkt mit niedrigerem Füllstoffgehalt hergestellt oder nach der Fertigung mit den gleichen oder einem anderen Polyether auf den gewünschten Gehalt verdünnt werden.

Geringe Zusätze extrem feinteiliger niedrigprozentiger Dispersionen, die unter hohem Äquivalentverhältnis (bis 1,5) hergestellt werden können, wirken in üblichen Schaumrezepturen mitunter als Zellöffner und erhöhen so in gewünschter Weise die Offenporigkeit. Gegenstand der vorliegenden Erfindung sind somit:

Stabile Dispersionen von Polyharnstoffen und/oder Polyhydrazodicarbonamiden mit einem Feststoffgehalt von 5 bis 40 Gew.-% in mindestens eine Hydroxylgruppe aufweisenden höhermolekularen Polyethern, erhältlich durch kontinuierliche Umsetzung von

a) organischen Polyisocyanaten mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Polyethern

bei einem Äquivalentverhältnis der Komponenten a) zu b) zwischen 1,051 und 1,50 in einem Durchflußmischer in einer solchen Menge, daß die mittlere Verweilzeit der Reaktionskomponenten im Mischer weniger als 10 Minuten beträgt, wobei anschließend das aus dem Durchflußmischer austretende Reaktionsprodukt in einer Vorlage, gegebenenfalls unter Erhitzen auf 50 - 150°C und gegebenenfalls unter Nachrühren, gesammelt wird.

Erfindungsgemäß bevorzugt sind solche stabilen Dispersionen, in denen als höhermolekulare Polyether (Komponente c) solche eingesetzt werden, deren OH-Gruppen zu mindestens 95 % sekundär sind, erhalten mit Feststoffgehalten von 5 bis 15 Gew.-% bei einem Äquivalentverhältnis der Komponenten a) zu b) zwischen 1,30 und

1,50 und mit Feststoffgehalten von 15 bis 40 Gew.-% bei einem Äquivalentverhältnis der Komponenten a) zu b) zwischen 1,051 und 1,30.

Erfindungsgemäß bevorzugt sind ferner solche stabilen Dispersionen, in denen als höhermolekulare Polyether (Komponente c) solche eingesetzt werden, deren OH-Gruppen zu mindestens 20 % primär sind, erhalten mit Feststoffgehalten von 5 bis 15 Gew.-% bei einem Äquivalentverhältnis der Komponenten a) zu b) zwischen 1,10 und 1,30 und mit Feststoffgehalten von 15 bis 40 Gew.-% bei einem Äquivalentverhältnis der Komponenten a) zu b) zwischen 1,051 und 1,10.

Erfindungsgemäß bevorzugt sind auch solche stabilen Dispersionen, in denen die Komponente b) bis zu 40 Mol-% an Alkanolaminen enthält.

Die Erfindung betrifft auch ein Verfahren zur Herstellung von stabilen Dispersionen von Polyharnstoffen und/oder Polyhydrazodicarbonamiden mit einem Feststoffgehalt von 5 bis 40 Gew.-% in mindestens eine Hydroxylgruppe aufweisenden höhermolekularen Polyethern, dadurch gekennzeichnet, daß

a) organische Polyisocyanate mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Polyethern

bei einem Äquivalentverhältnis der Komponenten a) zu b) zwischen 1,051 und 1,50 in einem Durchflußmischer in einer solchen Menge kontinuierlich umgesetzt werden, daß die mittlere Verweilzeit der Reaktionskomponenten im Mischer weniger als 10 Minuten beträgt, wobei anschließend das aus dem Durchflußmischer austretende Reaktionsprodukt in einer Vorlage, gegebenenfalls unter Erhitzen auf 50 - 150°C und gegebenenfalls unter Nachrühren, gesammelt wird.

Die Erfindung betrifft schließlich auch ein Verfahren zur Herstellung von gegebenenfalls geschäumten Polyurethankunststoffen, insbesondere von Weichschaumstoffen, durch Umsetzung von Polyisocyanaten mit höhermolekularen Hydroxylverbindungen, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermolekulare Hydroxylverbindungen ausschließlich oder anteilweise die erfindungsgemäßen Dispersionen eingesetzt werden.

Bei der Umsetzung von Polyisocyanaten mit Polyaminen in Gegenwart von Hydroxylgruppen enthaltenden Polyethern ist zwar die Reaktion zwischen NCO- und $NH_2$-Gruppen stark begünstigt, jedoch nehmen anteilmäßig auch die OH-Gruppen an der Reaktion teil. Durch diese Reaktion entstehen Polyharnstoff- und/oder Polyhydrazodicarbonamidketten, die mit Polyethermolekülen chemisch verknüpft sind. Solche Moleküle wirken dispergierend auf die Füllstoffpartikel. Der Anteil dieser Teilnahme der OH-Gruppen an der Polyadditionsreaktion ist von der Reaktionsführung abhängig. Reagieren zu viele Polyethermoleküle mit den Polyisocyanaten, so werden hochviskose Dispersionen erhalten. Ist der Anteil zu gering, so besteht die Gefahr der Sedimentation. Das erfindungsgemäße Verfahren erlaubt nun den Anteil der mitreagierenden Polyethermoleküle optimal einzustellen.

Bei höherem Äquivalentverhältnis von a) zu b) entstehen, wie schon betont, Dispersionen höherer Viskosität, deshalb muß das Äquivalentverhältnis dem Füllstoffgehalt angepaßt werden, d.h. bei niedrigem Füllstoffgehalt ist ein hohes Äquivalentverhältnis möglich, bei hohem Füllstoffgehalt ein niedrigeres Äquivalentverhältnis. Überwiegend sekundäre Hydroxylgruppen aufweisende Polyether erlauben im allgemeinen höhere Äquivalentverhältnisse als Polyether mit primären Hydroxylgruppen.

Funktionalität und Molekulargewicht des Polyethers haben neben dem Gehalt an primären und sekundären Hydroxylgruppen bei vorgegebenem Füllstoffgehalt einen Einfluß auf die Viskosität der Dispersionen. In der Regel ist die Viskosität bei vorgegebenem Füllstoffgehalt umso höher je höher Molekulargewicht und Funktionalität sind.

Wie schon oben erwähnt, ist für die Sedimentations-Stabilität der Dispersion ein gewisser Polyethereinbau erforderlich. Überraschenderweise wurde nun gefunden, daß gleichzeitig mit erhöhtem Polyethereinbau (hohes Äquivalentverhältnis) die Feinteiligkeit der Dispersion gesteigert wird. So betrug zum Beispiel bei einer 15 %igen Dispersion der mittlere Teilchendurchmesser bei einem Äquivalentverhältnis von 0,90 0,88 µm, bei einem Äquivalentverhältnis von 1,0 0,54 µm, bei einem Äquivalentverhältnis von 1,10 0,46 µm und bei einem Äquivalentverhältnis von 1,20 nur 0,40 µm.

Für die Eigenschaftsverbesserungen, die die erfindungsgemäßen Verfahrensprodukte in den daraus hergestellten Polyurethan-Kunststoffen bewirken, ist nun insbesondere auch die Teilchengröße der dispergierten Polyadditionsprodukte von ausschlaggebender Bedeutung. So muß z.B. bei der Verwendung der Polyether-Dispersionen als Ausgangsmaterial für die Herstellung von Polyurethan-Schaumstoffen der Durchmesser der Füllstoffteilchen weit unterhalb der Zellstegdimension (20 - 50 µ) liegen. In Polyurethanbeschichtungen müssen die Teilchen ebenfalls so klein sein, daß selbst bei sehr dünnen Aufträgen gleichmäßige Beschichtungen mit glatter Oberfläche erhalten werden.

Es ist daher naheliegend, daß die erfindungsgemäßen Dispersionen mit erhöhter Feinteiligkeit weitere Eigenschaftsverbesserungen bei den daraus hergestellten Polyurethan-Kunststoffen bewirken.

Für die Erfindung werden eingesetzt:

Als Ausgangskomponente a) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2 - 4, vorzugsweise 2,
und
Q einen aliphatischen Kohlenwasserstoffrest mit 2 - 18, vorzugsweise 6 - 10 C-Atomen,
einen cycloaliphatischen Kohlenwasserstoffrest mit 4 - 15, vorzugsweise 5 - 10 C-Atomen,
einen aromatischen Kohlenwasserstoffrest mit 6 - 15, vorzugsweise 6 - 13 C-Atomen,
oder einen araliphatischen Kohlenwasserstoffrest mit 8 - 15, vorzugsweise 8 - 13 C-Atomen,

bedeuten, z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, acylierte

Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Als Komponente b) zwei- und/oder mehrwertige, primäre und/oder sekundäre, aliphatische, araliphatische, cycloaliphatische und aromatische Polyamine, z.B. Ethylendiamin, 1,2- und 1,3-Propylendiamin, Tetramethylendiamin, Hexamethylendiamin, Dodekamethylendiamin, Trimethyldiaminohexan, N,N'-Dimethylethylendiamin, 2,2'-Bisaminopropyl-methylamin, höhere Homologe des Ethylendiamins wie Diethylentriamin, Triethylentetramin und Tetraethylenpentamin, Homologe des Propylendiamins wie Dipropylentriamin, Piperazin, N,N'-Bisaminoethylpiperazin, Triazin, 4-Amino-benzylamin, 4-Aminophenylethylamin, 1-Amino-3,3,5-trimethyl-5-aminomethyl-cyclohexan, 4,4'-Diaminodicyclohexylmethan und -propan, 1,4-Diaminocyclohexan, Phenylendiamine, Naphthylendiamine, Kondensate aus Anilin und Formaldehyd, Toluylendiamine, die Bis-aminomethylbenzole und die an einem oder beiden Stickstoffatomen monoalkylierten Derivate der genannten aromatischen Amine. Die Polyamine haben in der Regel ein Molekulargewicht von 60 bis 1000, bevorzugt von 60 bis 300.

Als Hydrazine seien Hydrazin und mono- oder N,N'-disubstituierte Hydrazine genannt, wobei die Substituenten $C_1$-$C_6$-Alkylgruppen, Cyclohexylgruppen oder Phenylgruppen sein können. Die Hydrazine haben in der Regel ein Molekulargewicht von 32 bis 500. Hydrazin selbst wird bevorzugt eingesetzt.

Als Hydrazide seien genannt die Hydrazide zwei- oder mehrwertiger Carbonsäuren wie Kohlensäure, Oxalsäure, Malonsäure, Bernsteinsäure, Adipinsäure, Sebazinsäure, Azelainsäure, Maleinsäure, Fumarsäure, Phthalsäure, Isophthalsäure, Terephthalsäure, ferner die Ester der Hydrazinmonocarbonsäure mit zwei- oder mehrwertigen Alkoholen und Phenolen wie z.B. Ethandiol, Propandiol-1,2, Butandiol-1,2, -1,3 und -1,4, Hexandiol, Diethylenglykol, Triethylenglykol, Tetraethylenglykol, Dipropylenglykol, Tripropylenglykol und Hydrochinon, sowie die Amide der Hydrazinmonocarbonsäure (Semicarbazide) mit z.B. den vorstehend genannten Di- und Polyaminen. Die Hydrazide haben in der Regel ein Molekulargewicht von 90 bis 3000, bevorzugt von 90 bis 1000.

Die vorstehend genannten Amine und Hydrazine werden gegebenenfalls in Form ihrer handelsüblichen wäßrigen Lösungen eingesetzt.

Als Alkanolamine seien z.B. Ethanolamin, Diethanolamin, Propanolamin, Dipropanolamin, Butanolamin und Dibutanolamin genannt.

Als Ausgangskomponente c) mindestens eine, in der Regel zwei bis acht, vorzugsweise aber zwei bis sechs Hydroxylgruppen aufweisende höhermolekulare Polyether vom mittleren Molekulargewicht 200 bis 16 000, vorzugsweise 500 bis 12 000.

Diese Hydroxylgruppen aufweisenden Polyether sind solche der an sich bekannten Art und werden z.B. durch Polymerisation von Epoxiden wie Ethylenoxid, Propylenoxid, Butylenoxid, Styroloxid oder Epichlorhydrin mit sich selbst, z.B. in Gegenwart von Lewis-Katalysatoren wie $BF_3$ oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin und Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet. Ferner hydroxyfunktionelle Polymerisate des Tetrahydrofurans.

Das erfindungsgemäße Verfahren erlaubt auch die anteilmäßige oder ausschließliche Verwendung von Isocyanaten bzw. Aminen, Hydrazinen oder Hydraziden, deren Funktionalität über zwei liegt. Es ist als überraschend anzusehen, daß die erfindungsgemäße Umsetzung solcher höherfunktionaler Verbindungen in Hydroxylgruppen enthaltenden Polyethern nicht zu festen oder zumindest sehr hochviskosen Reaktionsprodukten führt, sondern ebenfalls zu feinteiligen, niedrigviskosen Dispersionen.

Die nach dem erfindungsgemäßen Verfahren hergestellten, in Hydroxylgruppen enthaltenden Polyethern dispergierten Polyadditionsprodukte können auch durch anteilige Mitverwendung von monofunktionellen Isocyanaten, Aminen, Hydrazinderivaten oder Ammoniak modifiziert sein.

So läßt sich beispielsweise das mittlere Molekulargewicht der Polyadditionsprodukte durch den Einbau solcher monofunktionellen Verbindungen in gewünschter Weise einstellen. Bei Verwendung von Alkanolaminen mit primären oder sekundären Aminogruppen können Polyharnstoffe und Polyharnstoffpolyhydrazodicarbonamide aufgebaut werden, die freie Hydroxylgruppen aufweisen. Auch das Einbringen anderer Gruppierungen, wie z.B. Estergruppen, längerer aliphatischer Reste, tertiärer Aminogruppen, aktive Doppelbindungen usw. ist möglich, wenn entsprechend substituierte Mono- oder Diamine bzw. Isocyanate mitverwendet werden.

Die monofunktionellen Verbindungen können erfindungsgemäß in Anteilen bis zu 40 Mol-%, vorzugsweise bis zu 25 Mol-%, (bezogen auf gesamtes Isocyanat bzw. Amin, Hydrazin oder Hydrazid) eingesetzt werden.

Geeignete monofunktionelle Isocyanate sind z.B. Alkylisocyanate wie Methyl-, Ethyl-, Isopropyl-, Isobutyl-, Hexyl-, Lauryl- und Stearylisocyanat, Chlorhexylisocyanat, Cyclohexylisocyanat, Phenylisocyanat, Tolylisocyanat, 4-Chlorphenylisocyanat und Diisopropylphenylisocyanat.

Als Monoamine seien z.B. Alkyl- und Dialkylamine mit $C_1$-$C_{18}$-Alkylgruppen, cycloaliphatische Amine wie Cyclohexylamin und Homologe, Anilin und N-Alkylaniline sowie am Benzolkern substituierte Anilinderivate, Alkanolamine, wie Ethanolamin, Diethanolamin, Propanolamin, Dipropanolamin, Butanolamin und Dibutanolamin, sowie Diamine mit einer tertiären und einer primären bzw. sekundären Aminogruppe, wie z.B. N,N-Dimethyl-ethylendiamin und N-Methylpiperazin genannt. Als monofunktionelle Hydrazinderivate und Hydrazide kommen z.B. N,N-Dialkylhydrazine, die Hydrazide von Monocarbonsäuren, Hydrazinmonocarbonsäureester der monofunktionellen Alkohole oder Phenole sowie Semicarbazide wie z.B. Methyl-, Ethyl-, Propyl-, Butyl-, Hexyl-, Dodecyl-, Stearyl-, Phenyl- und Cyclohexyl-semicarbazid in Betracht.

Die Konzentration der Polyadditionsprodukte im Hydroxylgruppen tragenden Polyether kann in weiten Bereichen schwanken, liegt aber im allgemeinen zwischen 1 und 45 Gew.-%, besonders zwischen 5 und 40 Gew.-%. Die für Schaumstoffe mit optimalen Eigenschaften erforderliche Menge an dispergiertem Polyadditionsprodukt liegt im allgemeinen bei etwa 5 bis 15 Gew.-%. Selbstverständlich ist es erfindungsgemäß möglich, solche etwa 5 - 15 gew.-%igen Dispersionen direkt herzustellen. Aus ökonomischen Gründen wird es jedoch bevorzugt, eine Dispersion mit einem möglichst hohen Gehalt an Polyadditionsprodukten herzustellen (ca. 20 - 30 Gew.-%) und diese dann mit einem beliebigen Polyether auf die gewünschte Konzentration zu verdünnen.

Im allgemeinen werden die Reaktionskomponenten bei Raumtemperatur dem Durchflußmischer zugeführt. Infolge der Scherkräfte beim Einsatz eines dynamischen Mischers und der in Abhängigkeit von der Füllstoffmenge entstehenden Reaktionswärme der Polyaddition, steigen die Reaktionstemperaturen auf 50 bis 150°C an. Im allgemeinen ist es jedoch zweckmäßig, die Temperatur (gegebenenfalls durch Kühlung des Mischaggregats) unter 110°C zu halten, da sonst eventuell vorhandenes Wasser verdampft und durch Blasenbildung zu Störungen Anlaß geben kann. Im Fall der Verwendung von Hydrazin ist darauf zu achten, daß die Zersetzungstemperatur von Hydrazin nicht überschritten wird.

Ein wesentliches Merkmal des Verfahrens liegt darin, daß die Polyadditionsreaktion von Polyisocyanaten und Polyaminen, Hydrazinen oder Hydraziden in kontinuierlichen Durchflußmischern mit guter Mischwirkung bei mittleren Verweilzeiten unter 10, bevorzugt unter 3 Minuten durchgeführt wird.

Die Homogenisier- bzw. Dispergierzeit $\Theta$ sollte dabei nur max. 10 % der mittleren Verweilzeit $\bar{\tau}$ betragen, um eine innige Durchmischung der Komponenten zu erzielen. Es ist erfindungsgemäß möglich, aber nicht erforderlich, zwei oder auch mehrere Durchflußmischer hintereinander zu schalten. Die oben angegebenen Zeiten gelten dann sinngemäß für ein ganzes solches Mischaggregat.

Bei den Durchflußmischern unterscheidet man zwischen den statischen Mischern mit festen Einbauten und den

dynamischen Mischern mit beweglichen Einbauten nach dem Rotor/Stator-Prinzip. Sie können gegebenenfalls geheizt oder gekühlt werden.

Die erforderliche Mischenergie wird bei den statischen Mischern über die Pumpen aufgebracht, während bei den dynamischen Mischern ein separater Motor den Rotor antreibt.

Die statischen Mischer lassen sich unterteilen in

a) Mischer mit einfachen Einbauten (z.B. Wendel beim Static Mixer® der Firma Kenics Corp.*)

b) Mehrkanal-Mischer (z.B. AMK-Ross-ISG-Mischer der Aachener Misch- und Knetmaschinen-Fabrik,**)

c) sogenannte Packungsmischer, wie z.B. der statische Mischer der Fa. Sulzer AG (Winterthur, Schweiz) und der BMK-Mischer der Bayer AG**

d) als weitere Variante der statischen Mischer können Mischdüsen, z.B. die der Firma Lechler (Stuttgart**) oder die Mischkammern in den HK-Maschinen der Firma Hennecke (Birlinghofen**), in die die Ausgangsprodukte unter hohem Druck eingedüst werden (Gegenstrominjektion), angesehen werden.

---

*) USA

**) Bundesrepublik Deutschland

Ähnlich arbeitet auch der Intermixer ® der Firma Sonic (Connecticut*), bei dem das zu dispergierende Material auf eine bewegliche Zunge gedüst wird, die dadurch in Schwingungen (ca. 500 Hz) gerät und so das durchfließende Produkt intensiv dispergiert bzw. mischt.

Als dynamische Mischer kommen für das erfindungsgemäße Verfahren beispielsweise die Durchflußmischer der Firmen Ekato RMT (Schopfheim**), Lightnin (Neu-Isenburg**) und Hennecke (Stachelrührer) in Betracht, die ebenso wie die bekannten Kreiselhomogenisiermaschinen, z.B. Supraton ® der Firma Supraton Auer & Zucker OHG (Norf**) oder Dispax-Reaktor ® der Firma Janke & Kunkel KG (Staufen**) nach dem Stator-Rotor-Prinzip arbeiten, dabei jedoch nicht als Förderorgane benutzt werden können. Die aufzubringende Dispergierleistung beträgt je nach gewünschter Teilchengröße, verwendetem Mischertyp und Viskosität der Ausgangsstoffe etwa 1 bis über 10 kW pro Liter Mischerinhalt.

Beim Einsatz wasserfreier Amine, Hydrazine und Hydrazide ist nach Ablauf der Polyadditionsreaktion keine weitere Aufarbeitung erforderlich. Bei Verwendung wäßriger Amine (z.B. wäßrige Ethylendiaminlösung oder Hydrazinhydrat) ist es jedoch in manchen Fällen zweckmäßig, das Wasser aus der Dispersion im Vakuum zu entfernen.

---

*) USA

**) Bundesrepublik Deutschland

Im allgemeinen wird erfindungsgemäß so gearbeitet, daß man die drei Komponenten (Polyether, NH-Komponente und Polyisocyanat) aus getrennten Vorratsbehältern über Dosierpumpen dem Durchflußmischer zuführt, wo sie innig vermischt werden un gleichzeitig der größte Teil der Polyadditionsreaktion abläuft. Zur Vermeidung von örtlichen Überkonzentrationen ist es mitunter zweckmäßig, die Aminkomponente und/oder die Isocyanatkomponente mit Anteilen der Polyether-Komponente in vorgeschalteten statischen Mischern zu verdünnen.

Das weitgehend ausreagierte Produkt wird in eine Vorlage gefördert und dort gegebenenfalls zur Vervollständigung der Reaktion, gegebenenfalls unter Erhitzen auf 50 - 150°C, nachgerührt. Im Falle der Verwendung von wäßrigen Aminen werden gewünschtenfalls die Verfahrensprodukte im Vakuum vom Wasser befreit.

Die nach dem erfindungsgemäßen Verfahren hergestellten Dispersionen können während der Reaktion oder anschließend mit Zusatzstoffen wie Aktivatoren, Stabilisatoren, Wasser, Treibmitteln, Flammschutzmitteln, Farbpasten usw. versetzt werden.

Die nach dem erfindungsgemäßen Verfahren hergestellten Dispersionen lassen sich beispielsweise zu weichen, halbharten und harten Polyurethanschaumstoffen mit verbesserten Eigenschaften wie erhöhter Zugfestigkeit und Härte verarbeiten. Zur Herstellung von z.B. Elastomeren, Überzügen und Beschichtungen auf Polyurethanbasis sind die Dispersionen ebenfalls geeignet.

Das erfindungsgemäße Verfahren wird durch die folgenden Beispiele näher erläutert. Wo nicht anders vermerkt, sind Teile als Gew.-Teile und Prozentangaben als Gew.-% zu verstehen.

Die in den Beispielen benutzten Abkürzungen für die Polyether haben die nachfolgend angegebenen Bedeutungen:

Polyether A: Ein auf Trimethylolpropan gestarteter Polyether aus Propylenoxid und Ethylenoxid mit der OH-Zahl 35 und ca. 80 % primären OH-Gruppen.

Polyether B: Ein auf Trimethylolpropan gestarteter Polyether aus Propylenoxid und Ethylenoxid mit der OH-Zahl 45 und vorwiegend sekundären OH-Gruppen.

Polyether C: Ein auf Glycerin gestarteter Polyether aus Propylenoxid und Ethylenoxid mit der OH-Zahl 56 und ca. 50 % primären OH-Gruppen.

Polyether D: Wie Polyether A, jedoch OH-Zahl 28 bei ca. 80 % primären OH-Gruppen.

Polyether E: Lineares Polypropylenglykol (OH-Zahl 56) mit sekundären OH-Gruppen.

Polyether F: lineares Polypropylenglykol, endständig mit Ethylenoxid modifiziert (OH-Zahl 28; ca. 80 % primäre OH-Gruppen).

Polyether G: Auf Trimethylolpropan gestartetes Polyethylenoxid (OH-Zahl 550).

Beispiel 1

3000 g/min Polyether A und 225,6 g/min (4,48 Mol/min) Hydrazinhydrat (63,5 % Hydrazin) werden kontinuierlich in einen Statikmischer gepumpt, gleichzeitig werden 1000 g/min Polyether A und 856,75 g/min (4,92 Mol/min) einer Mischung aus 80 % 2,4- und 20 % 2,6-Toluylendiisocyanat durch einen zweiten Statikmischer gepumpt. Die beiden Teilströme gelangen getrennt voneinander in die Mischzone eines Stachelrührers (Kammervolumen 0,5 l, Drehzahl 5000 U/min) in dem unter exothermer Reaktion die Polyaddition erfolgt. Die den Stachelrührer verlassende Dispersion läuft in ein Verweilzeitgefäß, wo sie unter schnellem Rühren (entscheidend für eine möglichst niedrige Viskosität) bei 80 - 100°C für ca. 2 Std. gehalten wird. Nach dem Nachrühren wird das vom Hydrazinhydrat herrührende Wasser bei 100°C im Vakuum abdestilliert. Man erhält eine stabile, weiße, feinteilige 20 %ige Dispersion mit einer Viskosität von 7765 mPas/25°. Das angewandte Verhältnis von Isocyanat zu Hydrazin beträgt 1,1.

Beispiele 2 - 20

Die folgenden Produkte werden analog Beispiel 1 hergestellt. Die näheren Daten sind der Tabelle zu entnehmen. Als Isocyanat wurde ausschließlich eine Mischung aus 80 % 2,4- und 20 % 2,6-Toluylendiisocyanat eingesetzt. Die Beispiele 1 bis 18 wurden mit Hydrazinhydrat, Beispiel 19 bis 20 mit Ethylendiamin als Aminkomponente durchgeführt.

| Beispiel | Basispolyether | NCO/NH-Verhältnis | % Füllstoff | Visc. 25 °C mPas |
|---|---|---|---|---|
| 1 | A | 1,10 | 20 | 7765 |
| 2 | A | 1,15 | 20 | 15220 |
| 3 | A | 1,10 | 15 | 2610 |
| 4 | A | 1,15 | 15 | 3480 |
| 5 | A | 1,20 | 10 | 2820 |
| 6 | A | 1,25 | 10 | 3350 |
| 7 | A | 1,40 | 5 | 3000 |
| 8 | B | 1,15 | 20 | 3300 |
| 9 | B | 1,20 | 20 | 5400 |
| 10 | B | 1,10 | 30 | 16300 |
| 11 | C | 1,20 | 20 | 4500 |
| 12 | D | 1,10 | 15 | 3020 |
| 13 | D | 1,15 | 15 | 3790 |
| 14 | E | 1,10 | 20 | 4300 |
| 15 | E | 1,20 | 15 | 5200 |
| 16 | F | 1,10 | 20 | 7500 |
| 17 | F | 1,15 | 15 | 3700 |
| 18 | G | 1,20 | 20 | 3500 |
| 19 | A | 1,08 | 15 | 4500 |
| 20 | A | 1,10 | 15 | 6800 |
| Vergleichsbeispiel gemäß DE-PS 2513815 | A | 1.00 | 20 | 3300 |

Verwendung der erfindungsgemäßen stabilen Dispersionen zur Herstellung hochtragfähiger Polyurethan-Weichschaumstoffe

Beispiel 21

Ein Gemisch, bestehend aus

100 Gew.-Teilen einer gemäß Beispiel 4 hergestellten Dispersion (mit 15 % Füllstoff)

3,53 Gew.-Teilen Wasser

1,2 Gew.-Teilen eines handelsüblichen Weichschaumstabilisators (OS 15 - Handelsprodukt der Firma Bayer AG)

0,2 Gew.-Teilen Dimethylethanolamin

0,05 Gew.-Teilen 1,4-Diaza-bicyclo(2,2,2)octan

0,13 Gew.-Teilen Zinn(II)-octoat

wird mit 46,7 Gewichtsteilen eines Toluylendiisocyanat-Gemisches, das zu gleichen Anteilen aus T 80 und T 65 besteht, intensiv vermischt und in einer offenen Form verschäumt.

Vergleichsbeispiel 21a

Es wird in gleicher Weise verfahren wie in Beispiel 21 mit dem Unterschied, daß als Polyolkomponente 100 Gew.-Teile einer gemäß DE-PS 2 513 815 (siehe Tabelle) hergestellten Dispersion eingesetzt werden.

Mechanische Eigenschaften:

| | Beispiel 21 | Vergleichsbeispiel nach DE-PS 2 513 815 21a |
|---|---|---|
| Rohdichte (kg/m³) | 28 | 28 |
| Zugfestigkeit (kPa) | 135 | 130 |
| Bruchdehnung (%) | 175 | 160 |
| Stauchhärte (kPa) bei 40 % Verformung | 6,1 | 5,9 |

Verwendung der erfindungsgemäßen Dispersion zur Herstellung weichelastischer, tragfähiger Formschaumstoffe:

| Beispiel (Angaben in Gew.-Teilen) | 22 | 22a | 23 | 23a | 24 | 24a |
|---|---|---|---|---|---|---|
| Polyether D | 80 | 80 | 50 | 50 | 40 | 40 |
| PHD-Dispersion gem. Beisp. 4 | 20 | - | 50 | - | 60 | - |
| PHD-Dispersion gem. Vergleichsbeispiel gemäß DE-PS 2 513 815 | - | 20 | - | 50 | - | 60 |
| $H_2O$ | 3,2 | 3,2 | 3,0 | 3,0 | 3,0 | 3,0 |
| Aminkatalysator (Catalyst A 1 (UCC)) | 0,2 | 0,2 | 0,1 | 0,1 | 0,1 | 0,1 |
| Aminkatalysator (Dabco® 33 LV (Air Products)) | 0,5 | 0,5 | 0,3 | 0,3 | 0,5 | 0,5 |
| Polysiloxan-Stabilisator (KS 43 (Bayer AG)) | 1,0 | 1,0 | 1,0 | 1,0 | 1,0 | 1,0 |
| TDI/MDI-Gemisch | KZ 95 | KZ 95 | KZ 100 | KZ 100 | KZ 98 | KZ 98 |
| | | | | | | |
| Rohdichte ($kg/m^3$) | 34 | 34 | 50 | 50 | 42 | 42 |
| Zufestigkeit (kPa) | 90 | 100 | 225 | 240 | 170 | 150 |
| Bruchdehnung (%) | 175 | 155 | 165 | 175 | 185 | 180 |
| Stauchhärte ( 50) (kPa) | 2,0 | 2,1 | 6,9 | 7,0 | 4,5 | 4,0 |

Patentansprüche

1. Stabile Dispersionen von Polyharnstoffen und/oder Polyhydrazodicarbonamiden mit einem Feststoffgehalt von 5 bis 40 Gew.-% in mindestens eine Hydroxylgruppe aufweisenden höhermolekularen Polyethern, erhältlich durch kontinuierliche Umsetzung von

   a) organischen Polyisocyanaten mit

   b) primäre und/oder sekundäre Aminogruppen aufweisenden Polyaminen und/oder Hydrazinen und/oder Hydraziden in

   c) mindestens eine Hydroxylgruppe aufweisenden höhermolekularen Polyethern

   bei einem Äquivalentverhältnis der Komponenten a) zu b) zwischen 1,051 und 1,50 in einem Durchflußmischer in einer solchen Menge, daß die mittlere Verweilzeit der Reaktionskomponenten im Mischer weniger als 10 Minuten beträgt, wobei anschließend das aus dem Durchflußmischer austretende Reaktionsprodukt in einer Vorlage, gegebenenfalls unter Erhitzen auf 50 - 150°C und gegebenenfalls unter Nachrühren, gesammelt wird.

2. Stabile Dispersionen gemäß Anspruch 1, in denen als höhermolekulare Polyether (Komponente c) solche eingesetzt werden, deren OH-Gruppen zu mindestens 95 % sekundär sind, erhalten mit Feststoffgehalten von 5 bis 15 Gew.-% bei einem Äquivalentverhältnis der Komponenten a) zu b) zwischen 1,30 und 1,50 und mit Feststoffgehalten von 15 bis 40 Gew.-% bei einem Äquivalentverhältnis der Komponenten a) zu b) zwischen 1,051 und 1,30.

3. Stabile Dispersionen gemäß Anspruch 1, in denen als höhermolekulare Polyether (Komponente c) solche eingesetzt werden, deren OH-Gruppen zu mindestens 20 % primär sind, erhalten mit Feststoffgehalten von 5 bis 15 Gew.-% bei einem Äquivalentverhältnis der Komponenten a) zu b) zwischen 1,10 und 1,30 und mit Feststoffgehalten von 15 bis 40 Gew.-% bei einem Äquivalentverhältnis der Komponenten a) zu b) zwischen 1,051 und 1,10.

4. Stabile Dispersionen gemäß Anspruch 1 bis 3, in denen die Komponente b) bis zu 40 Mol-% an Alkanolaminen enthält.

5. Verfahren zur Herstellung von stabilen Dispersionen von Polyharnstoffen und/oder Polyhydrazodicarbonamiden mit einem Feststoffgehalt von 5 bis 40 Gew.-% in mindestens eine Hydroxylgruppe aufweisenden höhermolekularen Polyethern, dadurch gekennzeichnet, daß

a) organische Polyisocyanate mit

b) primäre und/oder sekundäre Aminogruppen aufweisenden Polyaminen und/oder Hydrazinen und/oder Hydraziden in

c) mindestens eine Hydroxylgruppe aufweisenden höhermolekularen Polyethern

bei einem Äquivalentverhältnis der Komponenten a) zu b) zwischen 1,051 und 1,50 in einem Durchflußmischer in einer solchen Menge kontinuierlich umgesetzt werden, daß die mittlere Verweilzeit der Reaktionskomponenten im Mischer weniger als 10 Minuten beträgt, wobei anschließend das aus dem Durchflußmischer austretende Reaktionsprodukt in einer Vorlage, gegebenenfalls unter Erhitzen auf 50 - 150°C und gegebenenfalls unter Nachrühren, gesammelt wird.

6. Verfahren zur Herstellung von gegebenenfalls geschäumten Polyurethankunststoffen, insbesondere von Weichschaumstoffen, durch Umsetzung von Polyisocyanaten mit höhermolekularen Hydroxylverbindungen, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermolekulare Hydroxylverbindungen ausschließlich oder anteilweise Dispersionen gemäß Ansprüchen 1 - 5 eingesetzt werden.

0188766

Europäisches Patentamt

# EUROPÄISCHER RECHERCHENBERICHT

Nummer der Anmeldung

EP 85 11 6198

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 271 248 (BAYER)<br>* Ansprüche 1-3,6-9; Seite 8, Zeile 31 - Seite 9, Zeile 3; Seite 14, Zeilen 4-24 *<br>--- | 1-3,5,6 | C 08 G 18/08<br>C 08 L 75/08<br>C 08 J 9/00<br>C 08 G 18/14 //<br>(C 08 L 75/08<br>C 08 L 75:02<br>C 08 L 79:00 ) |
| X | DE-A-2 519 004 (BAYER)<br>* Ansprüche 1-4,6-9; Seite 13, Absätze 3,4; Seite 18, Absätze 1,2; Seite 21, Absätze 2,3 *<br>--- | 1-6 | |
| A | GB-A-1 453 258 (BAYER)<br>* Ansprüche 1-3,11,12,14; Seite 2, Zeilen 46-96; Seite 4, Zeilen 112-120; Seite 5, Zeilen 37-58 * & DE - A - 2 513 815 (Kat. D)<br>--- | 1,2,4-6 | RECHERCHIERTE SACHGEBIETE (Int. Cl.4) |
| A | DE-A-3 125 402 (BASF)<br>* Ansprüche 1,7,9; Seite 13, Zeilen 23-34 *<br>----- | 1 | C 08 G<br>C 08 L<br>C 08 J |

Der vorliegende Recherchenbericht wurde für alle Patentansprüche erstellt.

| Recherchenort | Abschlußdatum der Recherche | Prüfer |
|---|---|---|
| DEN HAAG | 09-05-1986 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82